(19) Europäisches Patentamt
European Patent Office
Office européen des brevets

(11) Veröffentlichungsnummer: 0 202 559
B1

(12) # EUROPÄISCHE PATENTSCHRIFT

(45) Veröffentlichungstag der Patentschrift: **19.07.89**

(51) Int. Cl.⁴: **G02C 7/02**

(21) Anmeldenummer: **86106365.9**

(22) Anmeldetag: **09.05.86**

(54) **Multifokale Brillenlinse mit mindestens einer Gleitsichtfläche.**

(30) Priorität: **14.05.85 DE 3517321**

(43) Veröffentlichungstag der Anmeldung: **26.11.86 Patentblatt 86/48**

(45) Bekanntmachung des Hinweises auf die Patenterteilung: **19.07.89 Patentblatt 89/29**

(84) Benannte Vertragsstaaten: **AT BE CH DE FR GB IT LI NL SE**

(56) Entgegenhaltungen:
**EP-A- 0 039 497**
**EP-A- 0 132 955**
**FR-A- 2 495 789**
**FR-A- 2 533 708**
**US-A- 3 785 724**

(73) Patentinhaber: **Firma Carl Zeiss, D-7920 Heidenheim (Brenz)(DE)**
(84) Benannte Vertragsstaaten: **BE CH DE FR IT LI NL SE AT**

(73) Patentinhaber: **CARL-ZEISS-STIFTUNG trading as CARL ZEISS, D-7920 Heidenheim (Brenz)(DE)**
(84) Benannte Vertragsstaaten: **GB**

(72) Erfinder: **Fürter, Gerhard, Hinter den Gärten 10, D-7090 Ellwangen(DE)**

EP 0 202 559 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die vorliegende Erfindung bezieht sich auf eine multifokale Brillenlinse nach dem Oberbegriff des Anspruchs 1.

Solche Linsen werden im allgemeinen als Gleitsichtlinsen bezeichnet. Sie finden Verwendung zum Ausgleich der Fehlsichtigkeit bei Presbyopen (Altersichtigen), bei denen die Akkommodationsfähigkeit des Auges nachgelassen hat. Gleitsichtlinsen für Presbyope enthalten bisher einen oberen Fernsichtbereich und einen unteren Nahsichtbereich, die durch eine Progressionszone miteinander verbunden sind. Längs dieser Zone werden die Brechwerte der genannten Bereiche progressiv und kontinuierlich ineinander übergeführt. Eine solche Gleitsichtlinse ist aus einem Stück gefertigt, enthält keine störende Trennlinie zwischen den beiden Sichtbereichen und ist deshalb ästhetisch sehr befriedigend. Sie ist auch für den Brillenträger sehr angenehm, da die beiden Sichtbereiche kontinuierlich, vor allem auch ohne Bildsprung ineinander übergehen, so daß der Übergang von der Fern- zur Nahsicht ganz natürlich erfolgt.

Es gibt Aufgaben, bei denen ein Brillenträger mit einer Brillenlinse mit zwei Sichtweitenbereichen nicht zurechtkommt. So befindet sich z.B. bei einem Bildschirmarbeitzplatz der Bildschirm in einer Entfernung von 50-75cm, während die Tastatur in einer Entfernung von 40-50cm angeordnet ist und der Beleg neben dem Bildschirm oder neben der Tastatur angebracht sein kann.

Prinzipiell wäre es möglich hier mit Brillenlinsen zu arbeiten, die nur zwei, den genannten Sichtweiten entsprechende Bereiche aufweisen. Der Benutzer könnte dann allerdings Gegenstände und Personen außerhalb seines Arbeitsplatzes nicht deutlich sehen, d.h. er müßte seine Brille zum Blick in die Ferne abnehmen, bzw. bei bestehender Fehlsichtigkeit wechseln.

Um diesen gravierenden Nachteil zu vermeiden, sind z.B. in der Zeitschrift "Optometrie" 5 (1984), 208/213 spezielle Mehrstärkenlinsen vorgeschlagen worden, die drei Sichtweitenbereiche, nach Art einer bekannten Trifokallinse aufweisen. Diese Bereiche sind deutlich sichtbar über je eine Trennlinie gegeneinander abgegrenzt, so daß jeder Blickwechsel vom Fern- zum Bildschirmbereich oder vom Bildschirm zum Tastaturbereich mit einem Bildsprung verbunden ist.

Ähnlich verhält es sich mit einer Brillenlinse wie sie aus der DE-PS 31 27 148 bekannt ist. Eine solche Linse kann drei sphärische Bereiche unterschiedlicher Brechwerte aufweisen, die jeweils in der Ebene des Vertikal-Meridians eine gemeinsame Tangente haben, d.h. nahtlos aneinander anschließen. Seitlich dieses Meridians werden die Sichtbereiche mittels einer Übergangsfläche verbunden, wobei die Nahtlinien aufgrund der unterschiedlichen Krümmungsradien Kanten und damit optische Sprungstellen bilden. Es ist ohne weiteres einzusehen, daß eine solche, von Kanten durchzogene Brillenlinse in keiner Hinsicht befriedigen kann. Außerdem kann diese Linse nicht als Gleitsichtlinse bezeichnet werden, da sie sogar längs des Meridians Sprungstellen der Krümmungen und damit der Wirkungen aufweist.

Aus der US-PS 2 878 721 ist es bekannt eine Gleitsichtlinse mit einer extrem langen Progressionszone auszubilden. Damit lassen sich zwar die Bereiche seitlich dieser Zone so gestalten, daß sie über eine gewisse Breite relativ fehlerarm sind. Der Abstand zwischen Fern- und Nahwirkung ist jedoch bei einer solchen Linse zu groß. Die weitere Schwierigkeit ist die, daß eine solche Linse keine Bereiche aufweist, die bestimmten festen Sichtweiten zugeordnet sind, so daß der Benutzer durch Neigen des Kopfes jeweils die geeignete Durchblickstelle suchen muß.

Es ist nun die Aufgabe der vorliegenden Erfindung eine multifokale Brillenlinse zu schaffen, die dem Benutzer ein einwandfreies und ermüdungsfreies Arbeiten in drei unterschiedlichen Sichtweitenbereichen ermöglicht und die darüberhinaus in jeder Hinsicht ästhetisch voll befriedigt.

Diese Aufgabe wird mittels einer Gleitsichtlinse gelöst, gemäß nach dem kennzeichnenden Teil des Anspruchs 1 ausgebildet ist.

Bislang hat es dem Fachmann große Schwierigkeiten bereitet eine Gleitsichtlinse mit zwei Sichtweitenbereichen und einer dazwischenliegenden Progressionszone so auszubilden, daß dem Benutzer ein durch Bildfehler möglichst wenig gestörtes Sehen ermöglicht wird. Dies belegen eine Vielzahl unterschiedlicher Vorschläge, wie sie nur beispielsweise in den DE-PS 29 18 310 und 30 16 935 Niederschlag gefunden haben.

Diese Schwierigkeiten ließen es dem Fachmann nicht möglich erscheinen auf der doch recht kleinen Fläche einer Gleitsichtlinse drei, unterschiedlichen Sichtweiten zugeordnete Bereiche so unterzubringen, daß sie durch zwei räumlich voneinander getrennte Progressionszonen kontinuierlich ineinander übergeführt werden, ohne daß Bildfehler auftreten, deren Größe den bestimmungsgemäßen Gebrauch einer solchen Gleitsichtlinse zumindest sehr in Frage stellen.

Bei der vorliegenden Erfindung ist der bei der Konstruktion einer Gleitsichtlinse nach DE-PS 30 16 935 eingeschlagene Weg konsequent weiterverfolgt worden, nämlich die Gleitsichtlinse nach der beispielsweise aus dem Buch "Spline Analysis" von M.H.Schulz (Prentice-Hall Series in Automatic computation, Englewood Cliffs Nr. 9, 1973) bekannten mathematischen Methode der Spline-Analysis zu berechnen. Diese Analysis gibt dem Mathematiker die Grundlage den Flächenansatz zu finden, der es schließlich ermöglicht mit Hilfe eines, z.B. aus der ZS Optik 18 (1961) Seite 577 bekannten Optimierungsverfahrens sinnvolle optische Forderungen in der Fläche zu realisieren. Dabei muß die Forderung erfüllt sein, daß die sich ergebende Fläche zweimal stetig differenzierbar ist. Die sich aus dieser Rechnung ergebende Fläche ist eine Asphäre im allgemeinsten Sinne, d.h. ihre Bereiche stehen miteinander nicht in einem formelmäßigen Zusammenhang. Eine solche asphärische Fläche kann mit den neuen im Markt erhältlichen CNC-Maschinen hergestellt werden.

Bei der, auf der Basis profunder optischer und ophthalmologischer Kenntnisse erfolgten Berechnung einer Gleitsichtlinse mit den Merkmalen des Anspruchs 1 ergibt sich überraschend eine Gleitsichtlinse, welche die Aufgabe der Erfindung in einer nicht vorhersehbar optimalen Weise löst.

Weitere Ausgestaltungen der multifokalen Brillenlinse nach Anspruch 1 ergeben sich aus den Unteransprüchen 2 bis 11.

Anspruch 2 gibt eine vorteilhafte Zuordnung der Sichtweitenbereiche einer Brillenlinse für Bildschirmarbeitzplätze an. Die Ansprüche 3 und 4 beziehen sich auf die Ausbildung der Sichtweitenbereiche und der dazwischenliegenden Übergangszone, während sich die Ansprüche 5 und 6 auf die Ausbildung der Progressionszonen beziehen; Anspruch 7 beschreibt eine vorteilhafte Ausbildung des oberen Sichtweitenbereichs. Die Ansprüche 8–11 beschreiben mögliche Ausbildungen der Brillenlinse nach Anspruch 1.

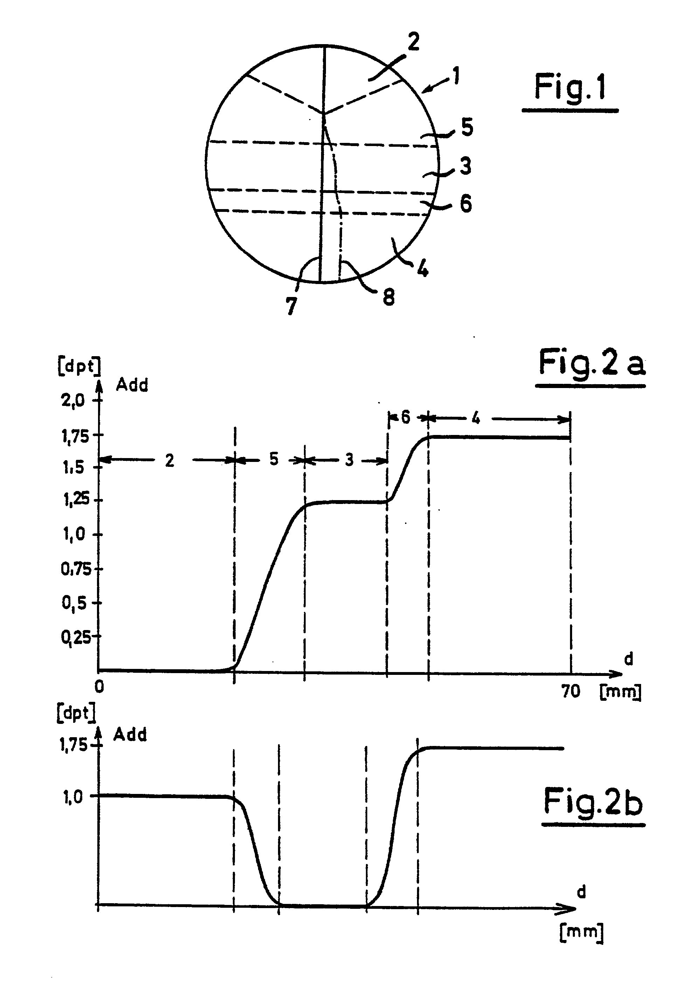

Anhand der Fig. 1-7 der beigefügten Zeichnungen wird die Erfindung im folgenden näher erläutert, wobei eine Ausbildung einer Gleitsichtlinse zum Gebrauch an Bildschirmarbeitsplätzen beschrieben ist. Es soll jedoch ausdrücklich erwähnt werden, daß die Sichtweiten der Sichtbereiche der Brillenlinse nach der Erfindung auch anders gewählt werden können um die Erfüllung anderer Aufgaben zu ermöglichen. Nur beispielsweise seien Brillen für Piloten von Verkehrsflugzeugen erwännt, bei denen der mittlere Sichtweitenbereich zur Fernsicht dient und der obere und der untere Sichtweitenbereich zur Beobachtung verschieden weit entfernter Instrumente ausgelegt ist.

Im einzelnen zeigen:

Fig. 1 eine Gleitsichtlinse in schematischer Darstellung;

Fig. 2a eine beispielsweise Verteilung der Brechwerte entlang des Meridians der Linse nach Fig. 1;

Fig. 2b ein Beispiel einer anderen Verteilung der Brechwerte;

Fig. 3 die Verteilung von Durchblickstellen über eine Gleitsichtfläche, an denen die der nachfolgenden Berechnung zugrundeliegenden optischen Forderungen festgelegt werden;

Fig. 4 die Verteilung der Linien gleichen Astigmatismus über eine Gleitsichtlinse nach dem Ausführungsbeispiel der Fig. 2a;

Fig. 5 Linien konstanten mittleren Flächenbrechwerts für eine Gleitsichtfläche nach dem Ausführungsbeispiel der Fig. 2a;

Fig. 6 eine Darstellung der Pfeilhöhen äquidistanter Punkte in der Verteilung über eine Gleitsichtfläche nach dem Ausführungsbeispiel der Fig. 2a;

Fig. 7 die Verzeichnung eines äquidistanten Objektgitters durch eine Brillenlinse nach den Ausführungsbeispiel der Fig. 2a.

Fig. 1 zeigt eine nach der Erfindung ausgebildete Gleitsichtlinse 1 in der Draufsicht auf ihre Gleitsichtfläche. Diese Linse weist einen oberen Sichtweitenbereich 2, einem mittleren Sichtweitenbereich 3 und einen unteren Sichtweitenbereich 4 auf. Zwischen den Sichtweitenbereichen 2,3 ist die obere Progressionszone 5 angeordnet, zwischen den Sichtweitenbereichen 3,4 die untere Progressionszone 6. Der Verlauf und der Abstand der Trennlinien sind hier nur beispielsweise wiedergegeben.

Die Linse 1 kann mit einem vertikalen Meridian 7 ausgebildet sein und stellt dann eine symmetrische Linse dar. Es ist auch möglich die Linse 1 als asymmetrische Linse auszubilden, die durch eine als zur Nase des Benutzers hin geschwungene Kurve verlaufende Hauptblicklinie 8 in ein nasales und ein temporales Gebiet geteilt ist.

Fig. 2a zeigt ein Beispiel für die Verteilung der Brechkraft der Linse 1 entlang des Meridians 7. Dieselbe Brechkraftverteilung ergibt sich längs der Hauptblicklinie 8 bei asymmetsrischer Ausbildung der Linse 1.

Fig. 2b zeigt ein anderes Beispiel für die Verteilung der Brechkraft einer Linse, die zur Benutzung durch Piloten geeignet sein könnte.

Man erkennt in Fig. 2a, daß die Linse 1 im oberen Sichtweitenbereich 2 den Brechwert 0 dpt hat. Dieser Bereich stellt bei Ausbildung der Linse 1 zum Gebrauch an Bildschirmarbeitsplätzen den Fernsichtsbereich dar. Innerhalb der oberen Progressionszone geht der Brechwert kontinuierlich auf einen Wert von +1.25 dpt im Sichtweitenbereich 3 über. Dieser Bereich wird zum Blick auf den Bildschirm und gegebenenfalls auf den seitlich davon angeordneten Beleg benutzt. Innerhalb der unteren Progressionszone 6 geht dann der Brechwert auf einen Wert von +1.75 dpt im unteren Sichtweitenbereich 4 über, der zum Blick auf die Tastatur benutzt wird.

Eine Gleitsichtlinse mit der in Fig. 2a dargestellten Brechkraftverteilung ist geeignet für einen normalsichtigen Presbyopen, dessen Akkommodationsvermögen beispielsweise noch 1.5 dpt umspannt. Bequem und ohne jede Anstrengung ist für diesen Presbyopen eine Akkommodation von 0.75 dpt zu schaffen. Im Mittelbereich 3 ergibt sich damit eine maximale Gesamtwirkung von 1.25+0.75 dpt = 2.0 dpt. Dies entspricht einer Sichtweite von 50cm. Im Nahbereich ergibt sich eine maximal Gesamtwirkung von 1.75+0.75 dpt = 2.5 dpt, was einer Sichtweite von 40cm entspricht. Die größte Sichtweite ergibt sich, wenn der Benutzer nicht akkommodiert. Im gezeigten Beispiel steht dann im Mittelbereich 3 eine Brechkraft von +1.25 dpt zur Verfügung, was einer Sichtweite des entspannten Auges von 80cm entspricht. Der Benutzer kann also ohne Anstrengung beim Blick durch den Mittelbereich 3 Gegenstände in einer Entfernung zwischen 80 und 50cm scharf sehen. Im Nahbereich steht eine Wirkung von 1.75 dpt zur Verfügung, was einer Sichtweite von etwa 60cm entspricht. Damit kann der Beobachter beim Blick durch den Nahbereich 4 Gegenstände in einer Entfernung zwischen 60 und 40cm scharf sehen.

Bei einem Presbyopen, dessen Akkommodationsvermögen nur noch 1 dpt beträgt, erhält der Mittelbereich 3 z.B. einen Brechwert von 1.5 dpt und der Nahbereich 4 einen Brechwert von 2.0 dpt. Damit wird in Bereich 3 deutliches Sehen zwischen 70 und 50cm möglich, in Bereich 4 zwischen 50 und 40 cm.

Diese Beispiele zeigen, daß bei Ausbildung einer Gleitsichtlinse nach den angegebenen Beispielen für den Benutzer bei jeder möglichen Anordnung von Bildschirm, Tastatur und Beleg ein entspanntes, deutliches Sehen auf alle diese Elemente möglich ist.

Die Addition im Mittelbereich 3 sollte entsprechend der Bildschirmentfernung das 0.4 bis 0.8-fache der Gesamtaddition, d.h. der Brechtwertzunahme zwischen den Bereichen 2 und 4 betragen. Andere Sehaufgaben bedingen eine entsprechend andere Verteilung von Wirkung und Bereichsgrößen (vergl. Fig. 2b).

In folgenden soll nun auf die Berechnung einer Gleitsichtlinse nach der Erfindung eingegangen werden. Zunächst wird die augenseitige Fläche der Linse entsprechend der geforderten Stärke (Brechkraft) nach den Gesichtspunkten einer einfachen Fertigung, einer guten Kosmetik und einer guten Verträglichkeit gewählt. Diese Fläche kann beispielsweise sphärisch sein. Ist ein Astigmatismus des Auges zu korrigieren, so kann die Rückfläche torisch oder auch atorisch gewählt werden.

Danach wird die objektseitige Gleitsichtfläche berechnet, die zusammen mit der Rückfläche die geforderte Linsenstärke ergeben muß. Diese Gleitsichtfläche wird in die drei Sichtweitenbereiche 2,3,4 geteilt, wobei der Mittelbereich eine Vertikalausdehnung von mindestens 7mm haben soll. Größere Werte, bis etwa 20mm, sind erreichbar. Als nächstes wird der Verlauf des Meridians, d.h. Kurve 7 oder 8 festgelegt. Außerdem wird die Länge der beiden Progressionszonen 5,6 und der Verlauf des Brechwertes entlang des Meridians in diesen Zonen bestimmt. Schließlich wird entschieden ob längs der Kurve 7 oder 8 Astigmatismus zugelassen wird. Ein solcher Astigmatismus soll Werte von 0.5 dpt nicht übersteigen.

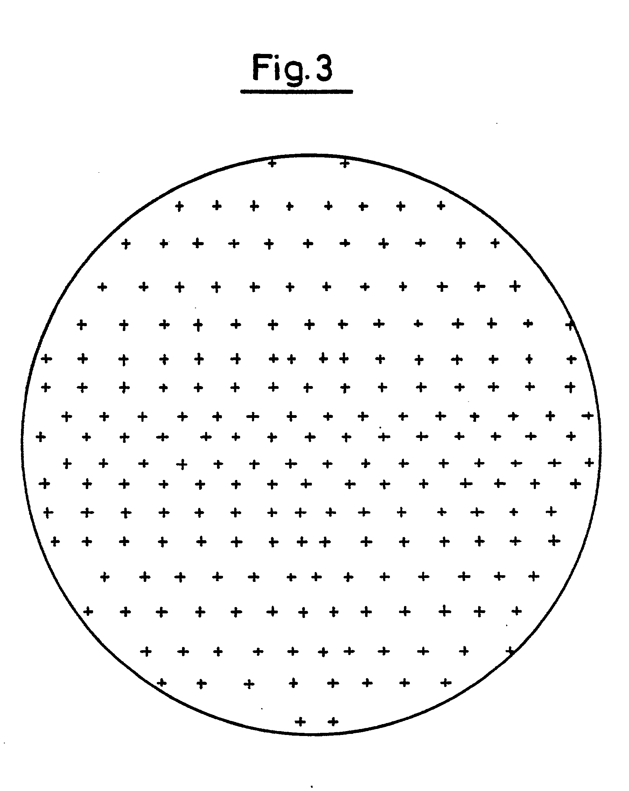

Der Konstrukteur legt dann auf der Gleitsichtfläche eine Vielzahl von Punkten, sog. Durchblickstellen fest, deren Verteilung aufgrund seiner Erfahrungen erfolgt. Eine solche beispielsweise Verteilung der Durchblickstellen über eine Gleitsichtfläche für eine Linse nach Fig. 1 ist in Fig. 3 dargestellt. An jeder Durchblickstelle wird die gewünschte dioptrische Wirkung (Stärke, Astigmatismus, prismatische Wirkung) festgelegt.

Dabei wird insbesondere gefordert, daß

a. die mittlere Wirkung in Mittelbereich innerhalb des gesamten Gebraüchsblickfeldes maximal um 20% der Gesamt-Addition schwankt. Das Gebrauchsblickfeld umfaßt in diesem Beispiel einem horizontalen Blickwinkel von etwa 25° nach nasal und temporal und die Gesamtaddition ist die Differenz der Wirkungen der Sichtweitenbereiche für die größte und die kleinste Entfernung;

b. die mittlere Wirkung im Nahsichtbereich innerhalb des Gebrauchssichtfeldes zur Seite hin abnimmt und zwar maximal um die Hälfte der Gesamtaddition, damit dem Umstand Rechnung getragen werden kann, daß ein seitlich der Tastatur liegender Beleg vom Auge des Benutzers weiter entfernt ist als die Tastatur selbst;

c. der gut abbildende Fernsichtbereich mindestens eine Fläche umfaßt, die durch ein auf der Spitze stehendes Quadrat beschrieben werden kann, wobei diese Spitze in dem Punkt der Kurve 7 oder 8 zu denken ist, in dem die Progression beginnt.

Der Konstrukteur legt dann ein, von der Verteilung der Durchblickstellen unabhangiges Punktnetz, vorzugsweise in Form eines gleichmäßigen Gitters über die Gleitsichtfläche und beginnt mit einer ihm geeignet erscheinenden Splinefunktion Sp (X,Y) der Fläche die Berechnung. Diese ergibt an den Durchblickstellen der Fig. 3 bestimmte dioptrische Wirkungen, die im allgemeinen nicht mit den gewünschten Werten übereinstimmen. Es folgen dann eine Anzahl von Optimierungsschritten, die solange fortgeführt werden, bis die Fläche-Parameter - vorzugsweise die Höhe der Netzpunkte - so festgelegt sind, daß die dadurch definierte Splinefunktion Sp (X,Y) in den Durchblickstellen mit hinreichender und erreichbarer Genauigkeit die gewünschten dioptrischen Werte ergibt. Diese Splinefunktion Sp (X,Y) der Fläche ergibt eine Gleitsichtfläche, die zweimal stetig differenzierbar ist, da dies eine Grundeigenschaft jeder Splinefunktion ist.

Wird die Rechnung in der geschilderten Weise mit den erwähnten Vorgaben durchgeführt, so resultiert daraus eine Linse, welche die gestellten Forderungen erfüllt und bei der nicht vorhersehbar zusätzlich

- im Gebrauchsblickfeld des seitlichen Übergangsbereich zwischen Mittelbereich 3 und Nahbereich 4, d.h. in den seitlichen Bereichen der Progressionszone 6 der in Dioptrien ausgedrückte Wert des Astigmatismus unterhalb des 1.5-fachen, vorzugsweise des 1-fachen Dioptrienwertes der Gesamtaddition bleibt,
- im Gebrauchsblickfeld des Übergangsbereichs zwischen Mittelbereich 3 und Fernsichtbereich 2, d.h. in den seitlichen Bereichen der Progressionszone 5 der in Dioptrien ausgedrückte Wert des Astigmatismus den 3-fachen, vorzugsweise den 2.5-fachen Wert der Gesamtaddition nicht überschreitet.

Dadurch wird zum einen erreicht, daß im Mittel-, Nahsicht -und im zugehörigen Übergangsbereich das Gebrauchsblickfeld voll nutzbar ist. Der Blick des Benutzers kann also zwischen Bildschirm, Beleg und Tastatur wandern, ohne durch störende Abbildungsfehler eingeschränkt zu werden. Beispielsweise kann bei einem Wert des Astigmatismus von 1 dpt normale Schrift noch gut gelesen werden.

Zum andern sind die Störungen des Gesichtsfeldes im Übergangsbereich zwischen Mittel und Fernsichtbereich aufgrund der in den angegebenen Grenzen gehaltenen Werte des Astigmatismus hinreichend gering. Größere Werte des Astigmatismus würden in dynamischen Sehen nicht nur zu wandernden Unschärfegebieten führen, sondern aufgrund der induzierten Verzeichnung auch zu unnatürlichen Objektbewegungen.

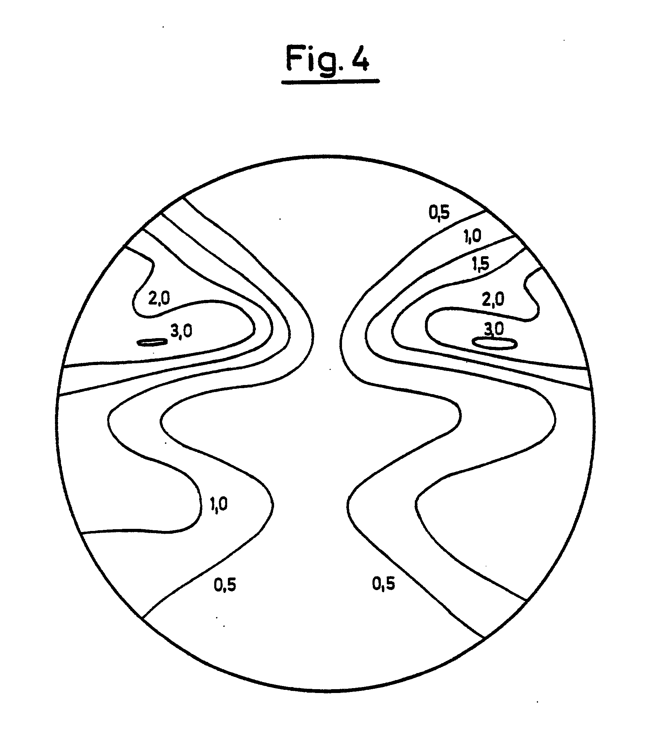

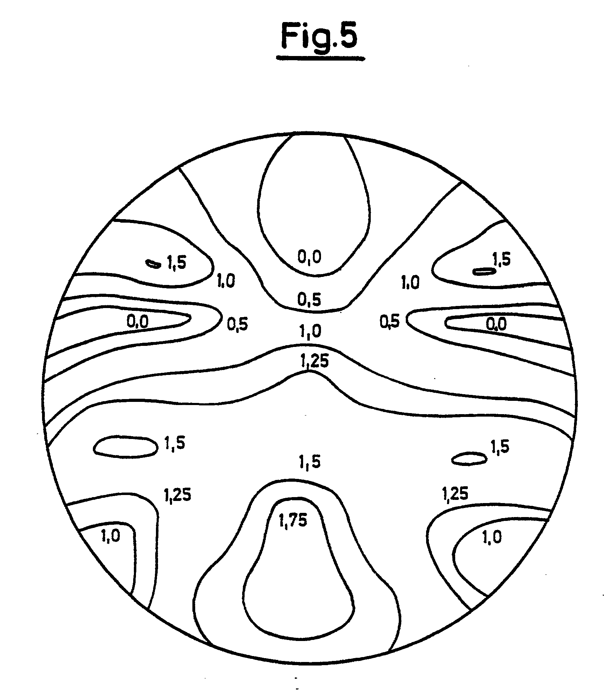

Fig. 4 zeigt die Verteilung des Astigmatismus über die Fläche einer Linse nach dem Beispiel der Fig. 2a. Man erkennt, daß im Mittel- und Nahbereich der Linse der Wert des Astigmatismus kaum über 1.0 dpt ansteigt. Die Stärke der Brillenlinse ist in Fig.5 dargestellt. Die Stärke bleibt im Mittelbereich der Linse praktisch bis zum Rand konstant und geht im Nahbereich in der geforderten vorteilhaften Weise etwas zurück.

Im dargestellten Beispiel geht die Stärke der Linse im oberen Bereich des Mittelteils 3 längs des Meridians sanft zurück. Dadurch wird der nutzbare Entfernungsspielraum im Mittelbereich größer und die obere Progressionszone 5 wird etwas breiter. Diese Variation sollte das 0.2-fache, besonders vorteilhaft das 0.15-fache der Gesamtaddition aber nicht übersteigen, da sonst die Akkommodation des Auges fühlbar belastet würde. Aus demselben Grunde sollte die vertikale Ausdehnung des Mittelbereichs mindestens 7 mm betragen.

Die Höhe und Breite des nutzbaren Fernbereichs 2 hängt von der gewählten Länge der Progressionszone 5 ab. Wählt man eine lange Zone so vergrößert sich deren nutzbare Breite, wählt man eine kürzere Progressionszone, so wird der nutzbare Fernbereich größer, jedoch die astigmatischen Unschärfen und die Schwankung der Stärke nehmen im seitlichen Teil des Progressionsbereiches zu.

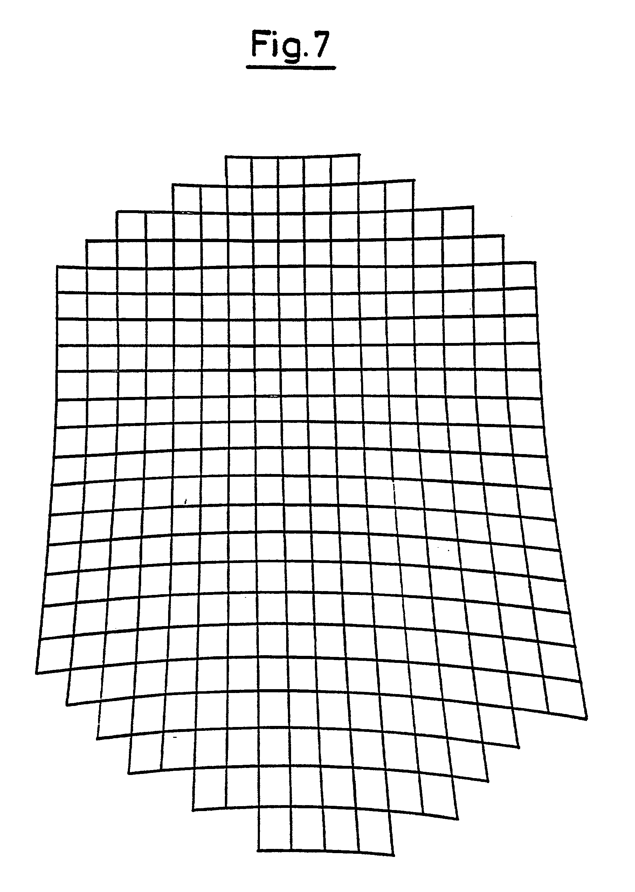

Wie die Figuren 4 und 5 zeigen, ergeben sich über die gesamte Gleitsichtlinse 1 große nutzbare Bereiche. Zudem ergibt sich eine für den Benutzer im statischen und dynamischen Sehen verträgliche Verzeichnung. Dies zeigt ohne weiteres ein Blick auf Fig. 7, die die Verzeichnung eines äquidistanten Objektgitters durch eine Brillenlinse nach dem gezeigten Ausführungsbeispiel darstellt. Man erkennt, daß bewußt darauf verzichtet ist, die Gleitsichtfläche so zu gestalten, daß vertikale Linien in Vertikale abgebildet werden. Die Verzeichnung im Fernbereich ist seitlich der Verzeichnung im Nahbereich angepaßt.

Dadurch nimmt im Fernbereich die horizontale Vergrößerung nach außen zu mit dem Ergebnis, daß die vertikalen Objektlinien weniger stark geneigt abgebildet werden. Man erkennt, daß die Verzeichnung im Fernbereich (Brechwert 0 dpt) sehr gering ist, und daß im Bereich der Addition eine Verzeichnung in der Art zugelassen ist, wie sie der Brillenträger z.B. von seiner normalen Lesebrille schon gewohnt ist.

Legt man Wert auf eine Gleitsichtlinse, die in jeder Blickrichtung gleiche Sehbedingungen für beide Augen gewährleistet und damit ungestörtes binokulares Sehen ermöglicht, so läßt sich durch entsprechende Vorgabe der dioptrischen Wirkungen in den Durchblickstellen die Rechnung so führen, daß dies weitgehend erreicht wird.

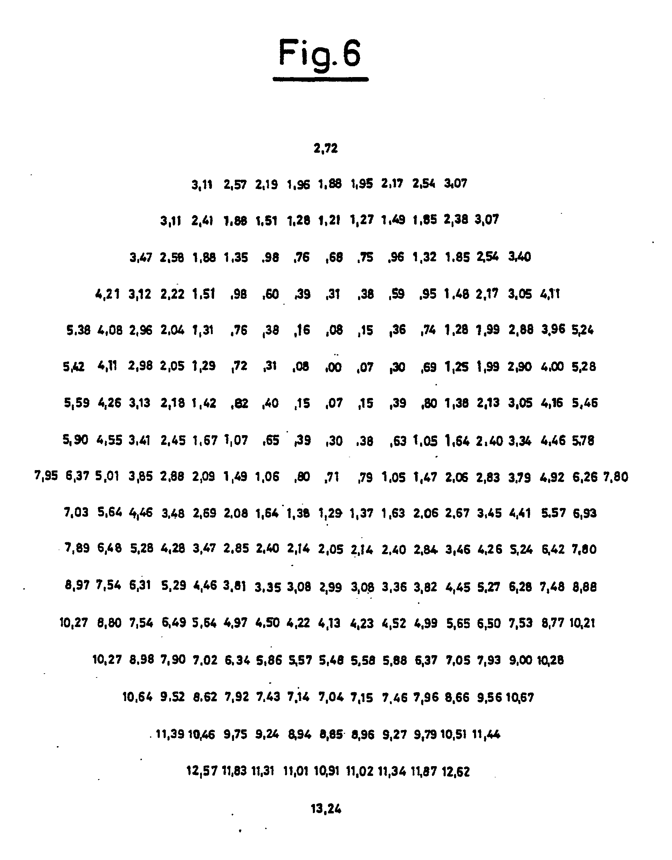

Fig. 6 zeigt die Pfeilhöhen der Gleitsichtfläche der Linse nach Fig. 2. In der Darstellung ist eine Vertikalebene an einen Punkt im Bereich der oberen Progressionszone 5 gelegt und es sind für die dargestellten Punkte die Abstände von dieser Ebene dargestellt.

Schneidet man eine Gleitsichtlinse nach der Erfindung entlang von Horizontalebenen, so können die resultierenden Horizontalschnitte der Gleitsichtfläche nicht durch eine Kegelschnittkurve beschrieben werden.

Wie dargelegt, ist die beschriebene und dargestellte Gleitsichtlinse für eine bestimmte Rückfläche berechnet. Ohne daß erkennbare Fehler auftreten, kann die einer vorgewählten Rückfläche entsprechende Gleitsichtfläche auch zusammen mit Rückflächen verwendet werden, die im Plus- und Minus-Dioptrienbereich in der Stärke von etwa ±0.5 dpt von der ursprünglichen Rückfläche abweichen.

Es ist ohne weiteres verständlich, daß im Rahmen der vorliegenden Erfindung auch Abweichungen von den gewählten Vorgaben gemacht werden können. So ist es möglich z.B. darauf zu verzichten, daß die gesamte Gleitsichtfläche zweimal stetig differenzierbar sein soll. Man kann für die Flächenteile (Randbereiche), für die der horizontale Sehwinkel >25° ist, d.h. die außerhalb des Gebrauchsblickfeldes liegen auf diese Forderung verzichten mit dem Ziel die Verzeichnung in diesem Bereich zu vermindern oder die astigmatische Unschärfe weiter zu reduzieren. Auch kann es für spezielle Anwendungen vorteilhaft sein die Stärke der Linse im unteren Teil des Nahsichtbereiches zunehmend zu verstärken und dafür eine Einengung dieses Bereichs in Kauf zu nehmen.

Im Zusammenhang mit den Zeichnungen ist die Erfindung in der Anwendung auf eine Gleitsichtlinse für Bildschirmarbeitsplätze beschrieben worden. Es sind auch andere Ausgestaltungen der Gleitsichtlinse möglich. Ein erstes Beispiel ist im Zusammenhang mit Fig. 2b erwähnt.

Besonders vorteilhaft für Benutzer, die Naharbeiten im Ober-Kopf-Bereich ausführen ist eine Gleitsichtlinse, bei welcher der Fernsichtbereich unten und der Nahsichtbereich oben liegt.

Außerdem ist eine Gleitsichtlinse vorteilhaft die sich von einer, einleitend erwähnten herkömmlichen Gleitsichtlinse dadurch unterscheidet, daß sich an den Nahsichtbereich nach unten zu über eine Progressionszone ein zusätzlicher Fernsichtbereich anschließt. Dies würde insbesondere einem Benutzer das Treppensteigen erleichtern.

In den verschiedenen Anwendungsfällen sind die Forderungen an Art, Größe und gegenseitige Anordnung der Sichtweitenbereiche sowie Ausgestaltung und Länge der Progressionszonen unterschiedlich. Doch ist immer dafür zu sorgen, daß das Sehen in den zu den jeweiligen Sehaufgaben gehörenden Gebieten guter Abbildung ungestört erfolgen kann, und daß die Störungen außerhalb dieser Gebiete klein sind. Dies ist unter Anwendung der offenbarten Berechnungsmethode durch adäquate Änderung der Forderungen a, b, c aus dem Beispiel der Bildschirmarbeitsplatz-Linse möglich.

In jedem Fall ist es sinnvoll den Abstand der beiden äußeren Sichtweitenbereiche unter 35 mm halten.

## Patentansprüche

1. Gleitsichtlinse mit mindestens einer Gleitsichtfläche, die so gestaltet ist, daß Bereiche, die unterschiedlichen aber jeweils konstanten Sichtweiten zugeordnet sind progressiv und kontinuierlich ineinander übergehen, dadurch gekennzeichnet, daß die Gleitsichtlinse drei räumlich voneinander getrennte Sichtweitenbereiche (2, 3, 4) aufweist, deren Brechwerte durch dazwischenliegende Progressionszonen (5, 6) kontinuierlich ineinander übergeführt sind, dadurch gekennzeichnet, daß der obere Sichtweitenbereich (2) und die daran anschließende Progressionszonen (5, 6) kontinuierlich ineinander übergeführt sind, daß der obere Sichtweitenbereich (2) und die daran anschließende Progressionszone (5) längs des vertikalen Meridians (7) in der oberen Linsenhälfte liegen, daß zwischen den beiden Progressionszonen (5, 6) ein Sichtweitenbereich (3) angeordnet ist, der eine Vertikalausdehnung von mindestens 7 mm hat und innerhalb dessen entlang des vertikalen Meridians (7) der Brechwert einen Übergang bildet, jedoch um nicht mehr als das 0,2-fache, vorzugsweise um nicht mehr als das 0,15-fache der Brechwertdifferenz der Sichtweitenbereiche für die grösste und kleinste Entfernung schwankt, und daß die Gleitsichtfläche mindestens bis zu einem horizontalen Sehwinkel von 25° nasal und temporal zweimal stetig differenzierbar ist.

2. Gleitsichtlinse nach Anspruch 1, dadurch gekennzeichnet, daß der obere Sichtweitenbereich (2) der Fernsicht, der untere Sichtweitenbereich (4) der Nahsicht zugeordnet ist, und daß die Addition im mittleren Sichtweitenbereich (3) zwischen dem 0.4- und dem 0.8-fachen der Gesamtaddition beträgt.

3. Gleitsichtlinse nach Anspruch 1-2, dadurch gekennzeichnet, daß der Brechwert im unteren Sichtweitenbereich (4) innerhalb des Gebrauchsblickfeldes zur Seite hin um maximal 50% der Gesamtaddition abnimmt.

4. Gleitsichtlinse nach Anspruch 1-3, dadurch gekennzeichnet, daß der gut abbildende Fernsichtbereich (2) mindestens eine Fläche umfaßt, die durch ein auf de Spitze stehendes Quadrat beschrieben ist, dessen Spitze in dem Punkt des Vertikal-Meridians (7,8) liegt, in dem die Progression beginnt.

5. Gleitsichtlinse nach Anspruch 1-4, dadurch gekennzeichnet, daß im Gebrauchsblickfeld des Übergangsbereichs (6) zwischen dem mittleren (3) und dem unteren (4) Sichtweitenbereich der in Dioptrien ausgedrückte Wert des Astigmatismus unterhalb des 1.5-fachen, vorzugsweise des 1-fachen Dioptrienwertes des Gesamtaddition gehalten ist.

6. Gleitsichtlinse nach Anspruch 1-4, dadurch gekennzeichnet, daß im Gebrauchsblickfeld des Übergangsbereichs zwischen Fern- und Mittelbereich (2,3) die in Dioptrien ausgedrückten Werte des Astigmatismus den 3-fachen, vorzugsweise den 2.5-fachen Wert des Gesamtaddition nicht überschreiten.

7. Gleitsichtlinse nach Anspruch 1-4, dadurch gekennzeichnet, daß die Verzeichnung in den seitlichen Zonen des oberen Sichtweitenbereiches (2) der Verzeichnung im unteren Sichtweitenbereich (4) angepaßt ist.

8. Gleitsichtlinse nach Anspruch 1-7, gekennzeichnet durch ihre Ausbildung als symetrische Lines mit vertikal verlaufendem Meridian (7).

9. Gleitsichtlinse nach Anspruch 1-7, gekennzeichnet durch ihre Ausbildung als asymmetrische Lines, die durch eine vom oberen zum unteren Sichtweitenbereich als eine zur Nase hin geschwungene Kurve verlaufende Hauptblicklinie (8) in ein nasales und temporales Gebiet geteilt ist.

10. Gleitsichtlinse nach Anspruch 8 oder 9, dadurch gekennzeichnet, daß längs des Meridians (7), bzw. der Hauptblicklinie (8) Astigmatismus mit einem Wert <0.5dpt. zugelassen ist.

11. Gleitsichtlinse nach den vorhergehenden Ansprüchen, dadurch gekennzeichnet, daß der Abstand der äußeren Sichtweitenbereiche unter 35 mm liegt.

**Claims**

1. A progressive spectacle lens with at least one progressive surface which is so shaped that regions of different but constant viewing distances pass progressively and continously into each other, characterized in that said lens has three spaced viewing-distance regions (2, 3, 4), the dioptric powers of which are converted continously into each other by two intervening progression zones (5, 6), that the upper viewing-distance region (2) and the progression zone (5) connected to it along the vertical meridian (7) are situated within the upper lens-half, that between said two progression zones (5, 6) there is situated a viewing-distance region (3) which has a vertical extend of at least 7 mm and within which the dioptric power varies along the vertical meridian (7) by not more than 0,2 times and preferably not more than 0,15 times the difference in dioptric power of the viewing-distance regions for the greatest and for the shortest distances and that the progressive surface is twice continuously differentiable nasally and temporally up to a horizontal viewing angle of at least 25°.

2. Progressive spectacle lens according to claim 1, characterized in that the upper distance-viewing region (2) is associated with distant vision, and the lower distance-viewing region (4) with near vision, and that the dioptric addition in the middle viewing-distance region (3) amounts to between 0.4 and 0.8 times the total dioptric addition.

3. Progressive spectacle lens according to claims 1–2, characterized in that the dioptric power in the lower viewing-distance region (4) decreases in laterally outward directions within the useful field of view by at most 50 percent of the total dioptric power.

4. Progressive spectacle lens according to claims 1–3, characterized in that the distant-vision region (2) of sharp focusing comprises at least an area which is described as a square standing with its included vertex at a point on the vertical meridian (7, 8) at which the progression commences.

5. Progressive spectacle lens according to claims 1–4, characterized in that within the useful field of view of the progressive zone (6) between the middle (3) and the lower (4) viewing-distance regions, the value of the astigmatism expressed in diopters is contained below the dioptric value of 1.5 times, preferably 1.0 times the total dioptric addition.

6. Progressive spectacle lens according to claim 4, characterized in that in the useful field of view of the progressive zone between the distance region (2) and the middle region (3), the value of the astigmatism expressed in diopters does not exceed 3 times, and preferably not 2.5 times, the value of the total dioptric addition.

7. Progressive spectacle lens according to claims 1–4, characterized in that the distortion in lateral zones of the upper viewing-distance region (2) is adapted to the distortion in the lower viewing-distance region (4).

8. Progressive spectacle lens according to claims 1–7, characterized in that the lens is developed as a symmetrical lens with a vertically extending meridian (7).

9. Progressive spectacle lens according to claims 1–7, characterized in that the lens is developed as asymmetric lens, which is divided into a nasal and a temporal region by a principal-sight line (8) which extends from the upper to the lower viewing-distance region as a curve which is swung towards the nose.

10. Progressive spectacle lens according to claim 8 or claim 9, characterized in that astigmatism having a value less than 0.5 diopters is permitted along the meridian (7) or the principal-sight (8).

11. Progressive spectacle lens according to the preceding claims, characterized in that the distance between the outer viewing-distance regions is less than 35 mm.

**Revendications**

1. Lentille progressive comportant au moins une surface progressive, qui est formée d'une façon telle que les domaines qui correspondent à des portées optiques différentes, mais respectivement constantes, présentent une transition progressive et continue, caractérisée en ce que la lentille progressive présente trois zones de portées optiques (2, 3, 4) séparées spatialement l'une de l'autre, dont les puissances dioptriques sont raccordées de façon continue à travers des zones progressives intermédiaires (5, 6), en ce que le domaine supérieur de portée optique (2) et la zone de progression (5) qui s'y raccorde sont situés le long du méridien vertical (7) dans la moitié supérieure de lentille, en ce qu'est disposé entre les deux zones de progression (5, 6) un domaine de portée optique (3) qui présente une dimension verticale d'au moins 7 mm et en qu'en ce qu'à l'intérieur de celui-ci le long du méridien vertical (7) la puissance dioptrique constitue une transition mais ne s'écarte pas de plus de 0,2 fois de préférence pas plus de 0,15 fois, la différence des puissances dioptriques des domaines de portées optiques pour la plus grande et la plus petite distance, et en ce que la surface de progression est différentiable deux fois de façon continue au moins jusqu'à un angle horizontal de vision de 25° en sens nasal et temporal.

2. Lentille progressive selon la revendication 1, caractérisée en ce que le domaine supérieur (2) de portée optique constitue le domaine de vision de loin, le domaine inférieur (4) de portée optique constitue le domaine de vision de près, et en ce que l'addition dans le domaine moyen de portée optique (3) est comprise entre 0,4 et 0,8 fois l'addition totale.

3. Lentille progressive selon la revendication 1 ou 2 caractérisée en ce que la puissance dioptrique dans le domaine de portée optique (4) diminue à l'intérieur du champ de vision utile vers le côté de moins de 50% de l'addition totale.

4. Lentille progressive selon l'une des revendications 1 à 3, caractérisée en ce que le domaine de vision de loin (2) créant une bonne image contient au moins une surface qui est inscrite dans un carré debout sur sa pointe, dont la pointe est située au point de méridien vertical 7, 8 où commence la progression.

5. Lentille progressive selon l'une des revendications 1 à 4, caractérisée en ce que dans le champ de vision utile du domaine de transition (6) entre le domaine de portée optique moyen et le domaine de portée optique inférieur (4) la valeur exprimée en dioptries de l'astigmatisme est maintenue en dessous de 1,5 fois de préférence 1 fois la valeur en dioptries de l'addition totale.

6. Lentille progressive selon l'une des revendications 1 à 4, caractérisée en ce que dans le champ de vision utile du domaine de transition entre le domaine de vision de loin et le domaine moyen (2, 3) les valeurs exprimées en dioptries de l'astigmatisme ne dépassent pas 3 fois de préférence 2,5 fois la valeur de l'addition totale.

7. Lentille progressive selon l'une des revendications 1 à 4, caractérisée en ce que la distorsion dans les zones latérales du domaine de portée optique supérieur (2) est adaptée à la distorsion dans le domaine de portée optique inférieur (4).

8. Lentille progressive selon l'une des revendications 1 à 7, caractérisée par sa structure de lentille symétrique comportant un méridien 7 de tracé vertical.

9. Lentille progressive selon l'une des revendications 1 à 7, caractérisée par sa structure de lentille asymétrique, qui est divisée en un domaine nasal et un domaine temporal par une ligne de vision principale (8) dont le tracé s'incurve vers le nez en partant du domaine supérieur de vision vers le domaine inférieur de vision.

10. Lentille progressive selon la revendication 8 ou 9, caractérisée en ce que le long du méridien (7) ou le long de la ligne (8) de visée principale est admis un astigmatisme d'une valeur < 0,5 dpt.

11. Lentille progressive selon les revendications précédentes, caractérisée en ce que la distance des domaines extérieurs de portée optique est inférieure à 35 mm.

2
1
5
3
6
4
7
8
Fig.1

Fig.2 a
[dpt]
Add
2,0
1,75
1,5
1,25
1,0
0,75
0,5
0,25
0
70
[mm]
d
2
5
3
6
4
Fig.2b
[dpt]
Add
1,75
1,0
d
[mm]

Fig.3

# Fig. 4

0,5
1,0
1,5
2,0
3,0
2,0
3,0
1,0
0,5
0,5

# Fig.5

0,0
1,5
1,0
1,5
1,0
0,5
0,0
0,5
0,5
0,0
1,0
1,25
1,5
1,5
1,5
1,25
1,25
1,75
1,0
1,0

# Fig. 6

2,72

3,11 2,57 2,19 1,96 1,88 1,95 2,17 2,54 3,07

3,11 2,41 1,88 1,51 1,28 1,21 1,27 1,49 1,85 2,38 3,07

3,47 2,58 1,88 1,35 ,98 ,76 ,68 ,75 ,96 1,32 1,85 2,54 3,40

4,21 3,12 2,22 1,51 ,98 ,60 ,39 ,31 ,38 ,59 ,95 1,48 2,17 3,05 4,11

5,38 4,08 2,96 2,04 1,31 ,76 ,38 ,16 ,08 ,15 ,36 ,74 1,28 1,99 2,88 3,96 5,24

5,42 4,11 2,98 2,05 1,29 ,72 ,31 ,08 ,00 ,07 ,30 ,69 1,25 1,99 2,90 4,00 5,28

5,59 4,26 3,13 2,18 1,42 ,82 ,40 ,15 ,07 ,15 ,39 ,80 1,38 2,13 3,05 4,16 5,46

5,90 4,55 3,41 2,45 1,67 1,07 ,65 ,39 ,30 ,38 ,63 1,05 1,64 2,40 3,34 4,46 5,78

7,95 6,37 5,01 3,85 2,88 2,09 1,49 1,06 ,80 ,71 ,79 1,05 1,47 2,06 2,83 3,79 4,92 6,26 7,80

7,03 5,64 4,46 3,48 2,69 2,08 1,64 1,38 1,29 1,37 1,63 2,06 2,67 3,45 4,41 5,57 6,93

7,89 6,48 5,28 4,28 3,47 2,85 2,40 2,14 2,05 2,14 2,40 2,84 3,46 4,26 5,24 6,42 7,80

8,97 7,54 6,31 5,29 4,46 3,81 3,35 3,08 2,99 3,08 3,36 3,82 4,45 5,27 6,28 7,48 8,88

10,27 8,80 7,54 6,49 5,64 4,97 4,50 4,22 4,13 4,23 4,52 4,99 5,65 6,50 7,53 8,77 10,21

10,27 8,98 7,90 7,02 6,34 5,86 5,57 5,48 5,58 5,88 6,37 7,05 7,93 9,00 10,28

10,64 9,52 8,62 7,92 7,43 7,14 7,04 7,15 7,46 7,96 8,66 9,56 10,67

11,39 10,46 9,75 9,24 8,94 8,85 8,96 9,27 9,79 10,51 11,44

12,57 11,83 11,31 11,01 10,91 11,02 11,34 11,87 12,62

13,24

Fig.7